# FASCICULE DE BREVET EUROPEEN

(11) **EP 0 524 046 B1**
(45) Date de publication et mention de la délivrance du brevet: **26.10.1994**
(21) Numéro de dépôt: 92401877.3
(22) Date de dépôt: 01.07.1992
(51) Int. Cl.: B64G 1/64

(54) **Dispositif de fixation mécanique temporaire souple en flexion et à rupture calibrée en traction et un procédé pour sa fabrication**
Temporäre, mechanische und biegsame Befestigungsvorrichtung mit Sollbruchstelle und Verfahren zu seiner Herstellung
Device for flexible temporary mechanical attachment with calibrated rupture in tension and method for its manufacture

(30) Priorité: 09.07.1991 FR 9108592
(43) Date de publication de la demande: 20.01.1993
(73) Titulaire: AEROSPATIALE Société Nationale Industrielle, 75781 Paris Cédex 16 (FR)
(72) Inventeur: Spariat, Jacques, F-33160 Saint Medard en Jalles (FR); Aubret, Jean-Pierre, F-33200 Bordeaux (FR); Barriere, Michel, F-33160 Saint Medard en Jalles (FR)
(74) Mandataire: Rinuy, Santarelli

(56) Documents cités:
- EP-A- 0 215 725
- CH-A- 90 138
- FR-A- 2 271 452
- US-A- 1 558 576

## Description

L'invention concerne un dispositif de fixation mécanique temporaire, souple en flexion et à rupture calibrée en traction, adapté notamment, mais non exclusivement, à l'assujettissement temporaire sur un support d'un objet destiné à être finalement éjecté avec des caractéristiques cinématiques et cinétiques précises

Elle se place avantageusement, mais de façon non exclusive, dans le domaine des engins spatiaux, tels que satellites, où intervient, après une phase de maintien temporaire, une phase de séparation avec éventuelle éjection avec plus ou moins de force. Elle peut aussi s'appliquer également à divers engins terrestres, maritimes (navires de surface ou sous-marins) et aériens (aéronefs en tous genres) dans lesquels on établit une liaison temporaire que l'on souhaite ensuite supprimer à un quelconque moment donné, avec éventuelle mise en mouvement prompte et précise de l'objet considéré (par exemple pour son lancement sans guidage extérieur).

C'est ainsi que l'invention peut notamment s'appliquer à la réalisation d'expériences scientifiques dans la haute atmosphère terrestre ou à l'exploration des planètes du système solaire à partir d'une sonde automatique. Elle peut par exemple servir à maintenir puis larguer ou éjecter un réservoir contenant une substance chimique destinée à servir de traceur pour étudier les vents ou champs magnétiques : il est ainsi possible d'éjecter un tel réservoir à partir d'une plate-forme artificielle, telle qu'une fusée-sonde ou une sonde planétaire.

On connaît déjà divers mécanismes assurant un tel assujettissement temporaire suivi d'une séparation et d'une éjection plus ou moins forte, pour en pratique assurer au moins une bonne séparation relative entre l'objet et son support.

On peut ainsi citer notamment les documents US-4.554.905, WO-82/02527, US-3.887.150, US-2.888.294, US-3.196.745, US-3.597.919, US-4.002.120, US-4.187.759, FR-2.616.856 ou FR-2.616.857.

En pratique, l'assujettissement temporaire de l'objet à son support est conçu pour être le plus rigide possible, en traction et en flexion.

On connaît ainsi des liaisons temporaires à séparation pyrotechnique : boulons explosifs, découpeurs à charge ou systèmes pyrotechniques de déverrouillage par effacement d'une butée. Ces diverses solutions, outre qu'elles nécessitent parfois de nombreuses pièces, supposent toujours des ordres de déverrouillage distincts des ordres d'éjection. En outre, ces opérations de séparation peuvent induire des perturbations sur l'éjection proprement dite et nuire à sa précision.

On connaît par ailleurs des liaisons à casser (frangibles) dont la rupture est commandée par l'éjection elle-même. C'est ainsi le cas de goupilles à cisailler ancrées par leurs extrémités, dans l'objet et le support respectivement, et disposées transversalement à la direction d'éjection. Cette technique à goupilles cisaillables présente toutefois les inconvénients suivants :
- elle nécessite un ajustement très précis entre les pièces en mouvement,
- il existe des risques de frottements parasites entre les pièces après rupture de la goupille,
- il existe une pièce supplémentaire, la goupille, dont les deux parties doivent être maintenues en place après rupture, et qui risquent en outre de racler la surface de l'autre pièce en regard,
- il est difficile de libérer l'objet, en pratique retenu par plusieurs goupilles, sans déséquilibrer le système (perturbations, en basculement notamment).

Cette solution est complexe car on est obligé de réaliser plusieurs pièces et de les monter dans un positionnement précis. Enfin, elle n'est pas toujours fiable.

Par ailleurs, la Demanderesse a pu constater que la rigidité de la liaison de l'objet à son support n'est pas toujours un avantage et qu'au contraire, pour permettre une éjection bien définie en amplitude et en orientation, il pouvait être avantageux de rendre cette liaison flexible quoique rigide en traction pour permettre ainsi de définir l'orientation de l'objet par rapport au support, avant et pendant l'éjection, grâce à la seule tige destinée à appliquer la poussée d'éjection.

Le Demanderesse a déjà décrit, dans la demande de brevet EP-A-0 454 546 publiée le 10 Octobre 1991 et ainsi faisant partie de l'état de la technique selon l'Article 54 (3) et (4) CBE, un dispositif d'assujettissement temporaire, simple et fiable, autorisant un débattement en flexion d'un objet par rapport à son support, comportant une zone de liaison frangible à rupture calibrée en traction, et avantageusement adapté à centrer au moins localement l'objet vis à vis d'une éventuelle direction d'éjection.

Cette demande de brevet a ainsi proposé un dispositif d'assujettissement temporaire d'un objet à un support comportant un corps destiné à être fixé au support et comportant une portion terminale annulaire fixée à l'objet et raccordée au corps par une portion de liaison, caractérisé en ce que cette portion de liaison ménagée entre la portion terminale annulaire du réceptacle fixée à l'objet et le corps est flexible et frangible, comportant une bague intermédiaire respectivement reliée à la zone terminale annulaire d'une part, et au corps d'autre part par deux paires de languettes axiales flexibles appariées selon des diamètres décalés angulairement de 90°, les languettes étant identiques dans chaque paire.

Grâce à son évidement axial central, ce dispositif permettait le coulissement d'une éventuelle tige d'éjection. En variante, il pouvait également permettre le passage de conducteurs électriques (qui étaient ainsi protégés) ou de tout autre tube ou câble de connection ou de transmission qu'il convient de préserver au mieux malgré le débattement relatif en flexion de l'objet par rapport à son support.

Selon des dispositions préférées de la demande de brevet européen citée ci-dessus, éventuellement combinées :
- les languettes de l'une des paires avaient des résistances à la traction égales, inférieures aux résistances à la traction égales des languettes de l'autre paire,
- les languettes reliant la bague intermédiaire à la zone terminale annulaire avaient des résistances à la traction égales, inférieures aux résistances à la traction égales des languettes reliant la bague intermédiaire au corps du réceptacle,
- les languettes des deux paires avaient des caractéristiques de flexion égales autour desdits diamètres selon lesquels ces languettes étaient respectivement appariées,
- les languettes desdites deux paires avaient une même épaisseur, mesurée transversalement aux dits diamètres et une même hauteur, mesurée parallèlement à la direction prédéterminée,
- les languettes de l'une des paires avaient une même dimension radiale, inférieure à la dimension radiale commune des languettes de l'autre paire,
- la bague intermédiaire et les languettes faisaient partie intégrante d'une partie au moins du corps et comportaient ladite portion terminale annulaire,
- ledit corps était creux et contenait une tige d'éjection comportant une portion arrière destinée à être soumise à une pression d'éjection et une extrêmité avant destinée à venir en appui contre l'objet,
- ce dispositif comportait un organe élastique comprimé axialement entre une collerette prévue à l'intérieur du corps et une portée prévue sur la portion arrière de la tige d'éjection mettant ainsi la portion de liaison frangible en précontrainte de traction ; cela évitait notamment un desserrage de la fixation de la portion terminale annulaire à l'objet,
- la portion terminale annulaire du réceptacle comportait une portion filetée extérieurement coopérant avec un filetage interne ménagé à l'embouchure d'un logement de l'objet,
- ce dispositif comportait une portion de centrage adaptée à pénétrer avec faible jeu dans ledit logement.

L'invention a pour objet d'améliorer les performances du disposif de fixation mécanique temporaire décrit dans la demande de brevet européen citée ci-dessus, en en simplifiant la fabrication et en en minimisant, en stockage, en service ou au moment de l'éventuelle éjection finale, les risques de détérioration intempestive, notamment en flexion, mais aussi de façon avantageuse, en torsion voire en cisaillement.

Plus précisément, un premier objet de l'invention est d'assurer de manière simple et fiable une délimitation du débattement en flexion (voire en torsion ou, mieux encore, en cisaillement) du dispositif, lors des manipulations, en cours de stockage ou en service de manière à préserver les languettes de tout régime de contraintes excessif susceptible d'en altérer notamment les caractéristiques de rupture à la traction ou encore lors de l'éventuelle éjection finale de manière à limiter le débattement en flexion lors de cette éjection, pour éviter tout risque de grippage/percussion lors du mouvement du piston à l'intérieur du dispositif (pour un piston de diamètre de 15 mm, le jeu de coulissement dans le dispositif de fixation peut être de 0,5 mm seulement) : l'invention vise ainsi une fiabilité accrue de l'éjection (s'il en est prévue une).

Il est en effet apparu qu'il suffit en pratique d'un faible débattement en flexion pour pouvoir profiter de la souplesse en flexion recherchée dans la demande antérieure précitée.

Du point de vue fabrication, un autre objet de l'invention, qui peut rejoindre le premier objet précité, est de réduire les précautions à prendre lors de la découpe des languettes calibrées et d'éviter en particulier d'avoir à recourir à des structures annexes de rigidification en flexion de l'ébauche lors de la découpe des languettes dans celles-ci pour minimiser les risques de détériorations induits notamment par les vibrations lors de l'usinage), de manière à permettre une fabrication à l'échelle industrielle pour un coût modéré.

L'invention propose ainsi un dispositif monobloc de fixation temporaire d'un objet à un support globalement allongé selon un axe de référence et comportant une première partie destinée à être fixée au support, et une seconde partie destinée à être fixée à l'objet et raccordée à la première partie par une portion de liaison souple en flexion comportant une paire de languettes axiales identiques alignées selon une première ligne transversale à l'axe de référence et coplanaire à celui-ci, flexibles parallèlement à une seconde ligne transversale à l'axe de référence et perpendiculaire à la première ligne transversale, et ayant une même énergie de rupture en traction parallèlement à l'axe, cette portion de liaison comportant en outre au moins une paire de premiers pieds solidaires de la première partie, disposés de part et d'autre de cette première ligne transversale et s'étendant axialement vers la seconde partie, et au moins une paire de seconds pieds solidaires de la seconde partie et s'étendant axialement vers cette paire de premiers pieds en en étant séparés axialement par une même distance axiale prédéterminée.

Selon des caractéristiques préférées de l'invention :
- cette portion de liaison comporte une autre paire de languettes axiales identiques, alignées selon une troisième ligne transversale parallèle à cette seconde ligne en en étant décalée axialement, et flexibles parallèlement à cette première ligne transversale, et ayant une même énergie de rupture en traction, cette paire de languettes axiales alignées selon la première ligne transversale et cette autre paire de languettes axiales étant décalées axialement en étant reliées entre elles par une pièce intermédiaire, ce dispositif comportant au moins une autre paire de premiers pieds solidaires de la première partie, disposés de part et d'autre de cette autre paire de languettes axiales et s'étendant axialement vers la seconde partie et au moins une autre paire de seconds pieds solidaires de la seconde partie et s'étendant axialement vers cette autre paire de premiers pieds en en étant séparés par une même autre distance axiale prédéterminée,
- à chaque paire de languettes axiales sont associées une paire de premiers pieds et une paire de seconds pieds, ces paires de premiers et seconds pieds étant décalées vis à vis des languettes axiales de cette paire de 90° autour de l'axe de référence,
- toutes les languettes et tous les premiers et seconds pieds sont à une même distance R de l'axe de référence,
- l'un au moins des premiers pieds et celui des seconds pieds qui lui est axialement en regard comportent respectivement des surfaces en regard, inclinées par rapport à l'axe de référence, et séparées par une distance prédéterminée, ces surfaces formant ainsi butées en torsion dans au moins un sens autour de l'axe de référence,
- cette paire de premiers pieds et cette paire de seconds pieds comportent chacune au moins une paire de deux surfaces inclinées ayant des inclinaisons de sens opposés par rapport à l'axe, ces paires de surfaces inclinées étant respectivement en regard à une même distance prédéterminée en sorte de former des butées de torsion dans les deux sens autour de l'axe de référence,
- ces inclinaisons de sens opposés ont une même valeur absolue,
- chaque premier pied et second pied comportent une telle paire de surfaces inclinées ayant des inclinaisons de sens opposés,
- lesdites surfaces inclinées ont une inclinaison par rapport à l'axe de référence comprise en valeur absolue entre 10° et 20°,
- l'un au moins des premiers pieds et celui des seconds pieds qui lui est axialement en regard comportent des saillies axiales décalées au moins approximativement parallèlement à la paire associée de languettes axiales et reliées par une languette secondaire allongée au moins approximativement parallèlement à cette paire associée de languettes axiales,
- la paire de premiers pieds et la paire de seconds pieds comportent chacune deux saillies axiales, les saillies axiales des premiers pieds étant reliées aux saillies axiales des seconds pieds respectivement par deux languettes secondaires disposées de part et d'autre de la paire associée de languettes axiales et allongées, dans le même sens, au moins approximativement parallèlement à cette paire associée de languettes axiales, grâce à quoi, lorsque ce dispositif est sollicité en torsion autour de l'axe de référence, l'une des languettes secondaires est sollicitée en traction tandis que l'autre de ces languettes est sollicitée en compression,
- ces première et seconde parties sont globalement cylindriques et creuses.

L'invention propose également un procédé de fabrication d'un dispositif monobloc de fixation temporaire d'un objet à un support, globalement allongé selon un axe de référence et comportant une première partie destinée à être fixée au support, une seconde partie destinée à être fixée à l'objet et raccordé à cette première partie par une portion de liaison souple en flexion comportant une paire de languettes axiales identiques alignées selon une première ligne transversale à l'axe de référence et coplanaire à celui-ci, flexibles parallèlement à une seconde ligne transversale à l'axe de référence et perpendiculaire à la première ligne transversale, et ayant une même énergie de rupture en traction parallèlement à l'axe, selon lequel, dans un premier temps, on élabore une ébauche comportant une première portion d'ébauche ayant la géométrie voulue pour cette première partie, une seconde portion d'ébauche ayant la géométrie voulue pour cette seconde partie et une portion intermédiaire d'ébauche reliant ces première et seconde portions d'ébauche et comportant une première paire de colonnes axiales principales alignées selon cette première ligne et au moins une seconde paire de colonnes axiales de rigidification disposées respectivement de part et d'autre de cette première ligne, dans un deuxième temps on usine dans cette première paire de colonnes axiales ladite paire de languettes axiales, et dans un troisième temps on usine dans cette seconde paire de colonnes axiales des saignées au moins en partie transversales à l'axe de référence en sorte d'y dégager une paire de premiers pieds solidaires de la première partie disposés de part et d'autre de cette première ligne transversale et s'étendant axialement vers la seconde partie, et au moins une paire de seconds pieds solidaires de la seconde partie et s'étendant axialement vers cette paire de premiers pieds en en étant séparés axialement par une même distance axiale prédéterminée.

Selon des caractéristiques préférées de ce procédé :
- dans le premier temps, on ménage dans cette portion intermédiaire une autre paire de colonnes axiales principales décalée axialement et angulairement vis à vis de cette paire de colonnes axiales principales et une autre seconde paire de colonnes axiales de rigidification séparées de cette paire de colonnes axiales principales et de cette seconde paire de colonnes axiales par une zone intermédiaire, dans le deuxième temps on usine dans cette autre paire de colonnes principales des languettes axiales identiques de même énergie à la rupture en traction et dans le troisième temps on usine dans cette autre seconde paire de colonnes axiales de rigidification des saignées en sorte d'y dégager une autre paire de premiers pieds solidaires de la première partie, disposés de part et d'autre de cette autre paire de languettes axiales et s'étendant axialement vers la seconde partie et au moins une autre paire de seconds pieds solidaires de la seconde partie et s'étendant axialement vers cette autre paire de premiers pieds en en étant séparés par une même autre distance axiale prédéterminée,
- il y a une seule seconde paire de colonnes axiales de rigidification par paire de colonnes axiales principales,
- toutes les languettes et tous les premiers et seconds pieds sont à une même distance R de l'axe de référence,
- on usine une seule saignée par colonne de cette seconde paire, ces saignées étant rectilignes transversales et s'étendent sur toute la section desdites colonnes de la seconde paire,
- chaque saignée traverse complètement ces colonnes de la seconde paire et comporte une partie transversale et au moins une partie inclinée par rapport à l'axe en sorte de former des surfaces de butée en torsion,
- chaque saignée comporte une partie transversale entre deux parties inclinées par rapport à l'axe de référence, ayant des inclinaisons de sens opposés, en sorte de dégager des surfaces de butée en torsion pour chacun des sens de torsion autour de l'axe de référence,
- chaque partie inclinée a une inclinaison comprise entre 10 et 20° par rapport à l'axe de référence,
- dans chaque colonne de cette seconde paire on usine deux saignées transversales ne traversant, parallèlement à la ligne reliant les languettes axiales associées, qu'une partie de cette colonne, et orientées en sens opposés en sorte de dégager dans cette colonne une languette transversale de liaison entre le premier et le second pied,
- chaque saignée est obtenue par électro-érosion, de préférence par fil.

Des objets, caractéristiques et avantages de l'invention ressortent de la description qui suit, donnée à titre d'exemple non limitatif, en regard des dessins annexés sur lesquels :
- la figure 1 est une vue en perspective d'un premier exemple de réalisation d'un dispositif de fixation conforme à l'invention,
- la figure 2 en est une vue en coupe axiale, selon le plan de coupe II-II de la figure 1,
- la figure 3 est une vue en perspective d'un deuxième exemple de réalisation d'un dispositif de fixation conforme à l'invention,
- la figure 4 en est une vue en coupe axiale, selon le plan de coupe IV-IV, de la figure 3,
- la figure 5 est une vue en perspective d'un troisième exemple de réalisation d'un dispositif de fixation conforme à l'invention,
- la figure 6 est une vue à plus grande échelle du détail repéré à la figure 5 par la flèche VI, et
- la figure 7 est une vue similaire à celle de la figure 2, montrant une ébauche élaborée dans une phase intermédiaire de la fabrication du dispositif des figures 1 et 2.

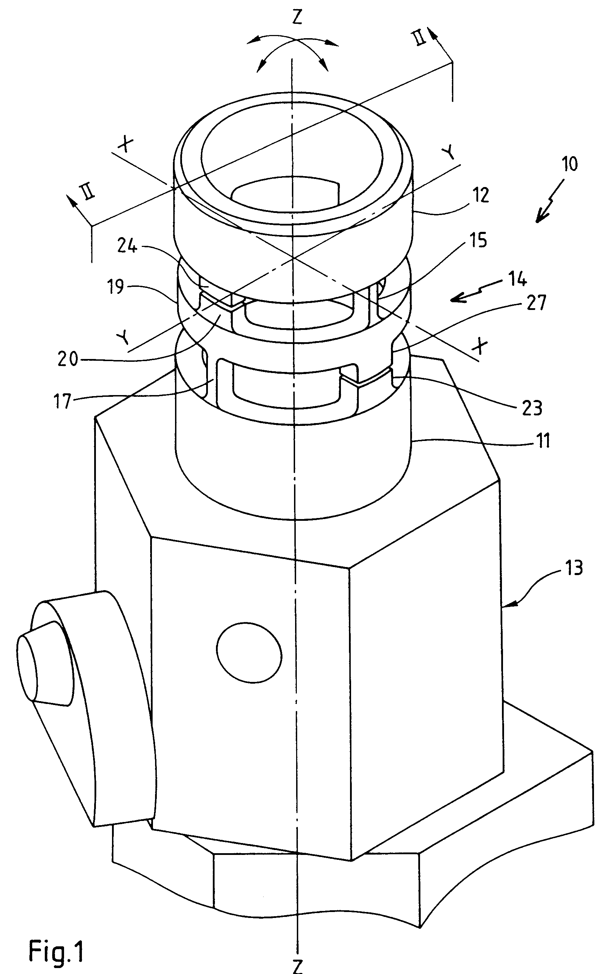

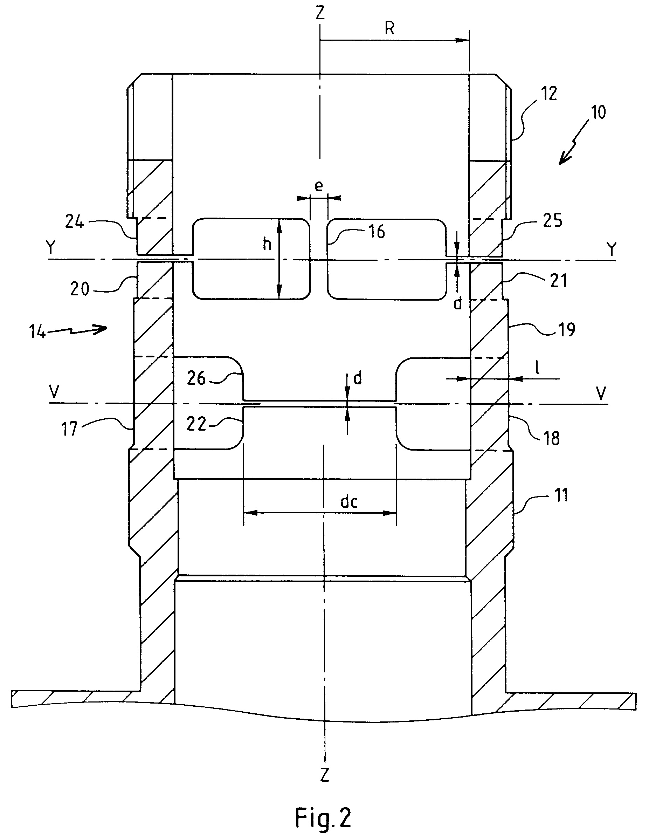

Les figures 1 et 2 représentent, dans une première forme de réalisation de l'invention, un dispositif de fixation temporaire 10 globalement allongé selon un axe de référence Z-Z. Ce dispositif est monobloc et comporte une première partie 11 ici cylindrique, destinée à être fixée à un support (non représenté) et une seconde partie 12, ici annulaire, destinée à être fixée à un objet (non représenté) que l'on veut assujetir temporairement au support, jusqu'à sa séparation commandée vis à vis dudit support, au moyen par exemple d'un piston d'éjection adapté à coulisser axialement dans ces première et seconde parties 11 et 12, en étant logé, au repos, dans un corps 13 lié à la première partie ; ce corps et les moyens d'éjection ne faisant pas partie de l'invention, ils ne seront pas décrits.

En pratique, la seconde partie 12 est filetée extérieurement de manière à pouvoir être fixée par vissage à l'objet.

Ces parties 11 et 12 sont raccordées l'une à l'autre par une portion intermédiaire de liaison 14, souple en flexion et à rupture calibrée en traction.

Cette portion intermédiaire de liaison 14 comporte au moins une paire de languettes axiales identiques 15 et 16, alignées selon une première ligne X-X qui est transversale à l'axe de référence Z-Z et co-planaire à celui-ci. Ces languettes 15 et 16 sont flexibles parallèlement à une seconde ligne Y-Y qui est transversale à l'axe de référence et perpendiculaire à la ligne X-X.

Ces languettes ont des sections transversales de même aire et sont de mêmes géométries (épaisseur e, hauteur h, largeur radiale l) et ont des énergies à la rupture en traction égales.

En fait, pour assurer une possibilité de flexion dans n'importe quel sens transversal à Z-Z, la portion intermédiaire de liaison 14 comporte de préférence une autre paire de languettes axiales identiques 17 et 18 qui sont alignées selon une troisième ligne transversale V-V parallèle à la ligne Y-Y mais décalée axialement vis à vis de celle-ci, et qui sont flexibles parallèlement à la première ligne X-X. Ces languettes 17 et 18 ont des sections de même aire et sont de mêmes géométries ; elles ont des énergies à la rupture en traction égales, en principe différentes des énergies de rupture des languettes 15 et 16 pour assurer que, lors de la sollicitation finale en traction, ce sont les languettes d'une seule paire qui cèdent.

Les languettes 15 et 16, et les languettes 17 et 18, sont reliées par une pièce intermédiaire 19, ici conformée en bague annulaire.

Le dispositif de fixation 10 comporte en outre, pour chaque paire de languettes axiales 15-16 ou 17-18, une paire, ici unique, de premiers pieds 20 et 21 (ou 22 et 23 respectivement) solidaires de la première partie, disposés de part et d'autre de la ligne X-X ou V-V reliant les languettes axiales associées, et s'étendant axialement vers la seconde partie, ainsi qu'une paire, ici unique aussi, de seconds pieds 24 et 25 (ou 26 et 27 respectivement) solidaires de la seconde partie et s'étendant axialement en regard desdits premiers pieds 20 et 21 (22, 23 respectivement) dont ils sont séparés axialement par une distance d prédéterminée, avantageusement égale au repos pour tous les couples de premier/second pieds, déterminant un débattement en flexion pour les languettes axiales.

On appréciera que les diverses languettes et les divers pieds précités sont ici à une même distance R de l'axe Z-Z puisque ces languettes et ces pieds sont ménagés dans une même partie d'ébauche cylindrique. En variante non représentée, les languettes d'une part et les pieds d'autre part, peuvent avoir des écarts à l'axe Z-Z différents.

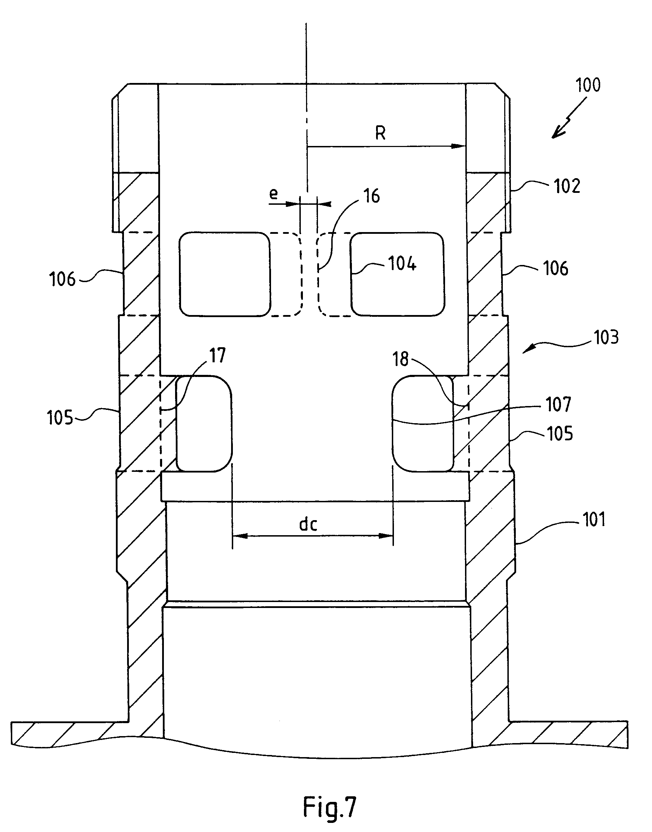

Plus précisément, le cycle de fabrication du dispositif de fixation temporaire 10 comprend les étapes suivantes :
a) - dans un premier temps (figure 7) on élabore une ébauche 100 comportant une première portion d'ébauche 101 ayant la géométrie voulue pour la première partie 11, une seconde portion d'ébauche 102 ayant la géométrie voulue pour la seconde partie 12, et une portion intermédiaire d'ébauche 103 reliant ces portions 101 et 102 et comportant deux paires de colonnes axiales principales 104 (105 respectivement) aux futurs endroits des paires de languettes axiales 15 et 16 (17 et 18 respectivement) ainsi que deux paires de colonnes de rigidification 106 et 107 aux futurs endroits des premiers et seconds pieds. Bien entendu, les colonnes axiales principales peuvent être, ou non, complètement isolées, voire même nettement différenciées, vis à vis des autres colonnes de rigidification.
b) - dans un deuxième temps, on usine (voir les traits pointillés de la figure 7) dans ces colonnes axiales principales les languettes axiales 15 à 18 ; cet usinage peut se faire par fraisage puisque les colonnes 106 et 107, compte tenu de l'importance de leur section, rendent l'ébauche suffisamment rigide en flexion pour supporter les vibrations de fraisage ; on procède ensuite au contrôle dimensionnel des languettes.
c) - dans un troisième temps, on usine, de préférence par électro-érosion à fil, une saignée en travers des colonnes 106 et 107 en sorte de séparer les premiers et seconds pieds, cette saignée ayant pour épaisseur la distance voulue pour le débattement axial entre lesdits premiers et seconds pieds.

On appréciera que la possibilité d'usiner les languettes par fraisage facilite sensiblement le cycle de fabrication ; en outre, un usinage par fraisage est bien moins fragilisant pour les languettes axiales du dispositif qu'un usinage par électro-érosion qui serait, en pratique, seul possible en l'absence des colonnes 106 et 107.

Le traçage par électro-érosion des saignées dans les colonnes de rigidification n'engendre pas de tension dans le dispositif et permet des saignées fines (par exemple 0,3 à 0,4 mm).

Dans l'exemple représenté les colonnes de rigidification 106 et 107 ont une dimension circonférentielle (repérée dc sur la figure 2) valant de l'ordre du rayon interne R de l'ébauche d'origine 100 ; cette distance dc vaut en pratique, de préférence au moins quatre fois l'épaisseur e des languettes. Dans ce qui précède, on a supposé que languettes et colonnes avaient la même dimension radiale, ce qui n'est bien sûr pas une exigence ; dans le cas contraire, le rapport précité s'applique aux sections des languettes et des colonnes.

A titre d'exemple pour un diamètre interne de 15 mm et une largeur radiale l de 2 mm, la dimension dc vaut 8 mm et l'épaisseur des languettes vaut 1,2 mm.

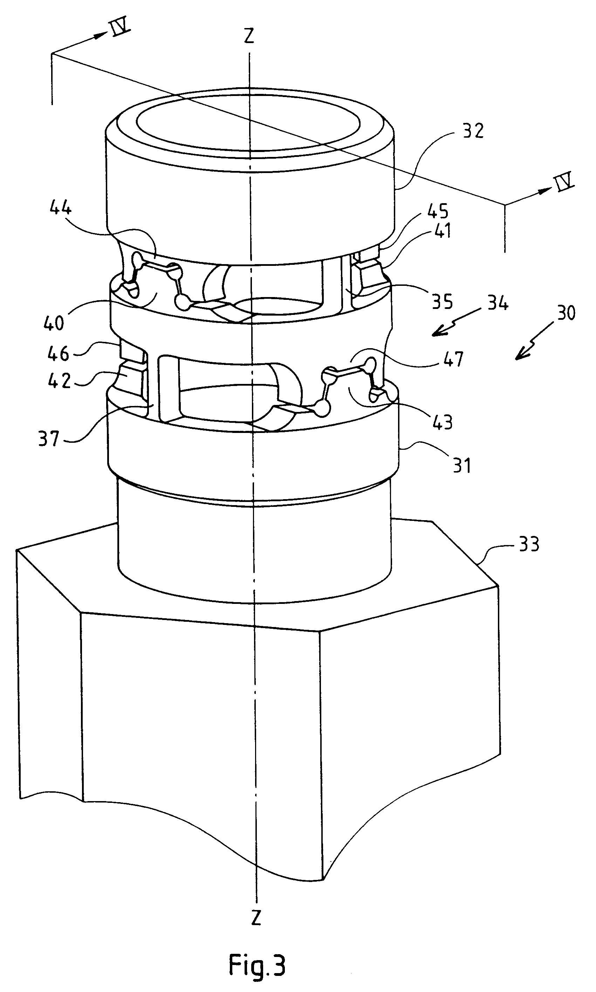

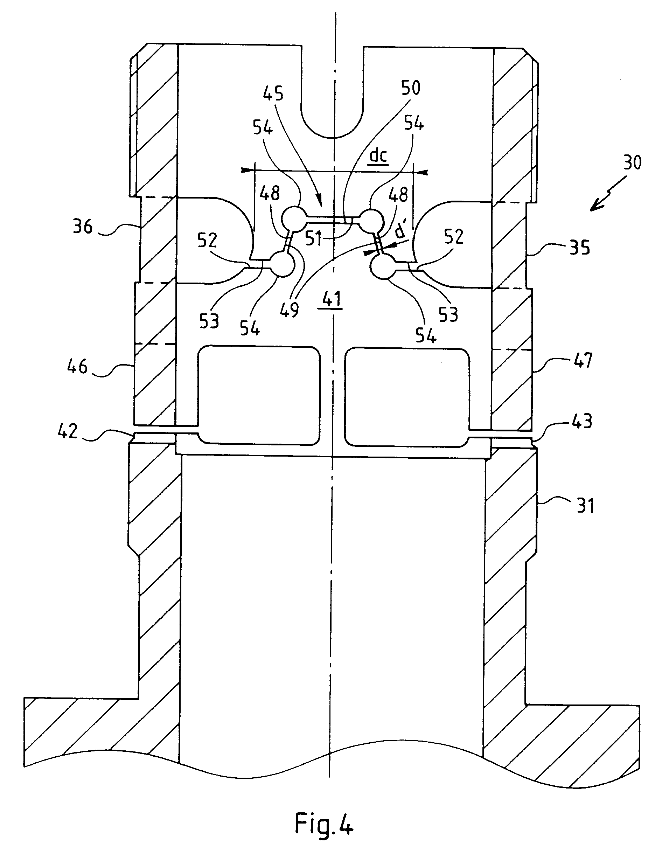

Les figures 3 et 4 représentent une variante de réalisation du dispositif 10 des figures 1 et 2. Ce deuxième dispositif est noté 30 dans son ensemble et ceux de ses éléments qui sont analogues à ceux des figures 1 et 2 portent des chiffres de référence qui s'en déduisent par addition du nombre 20.

Ce dispositif 30 se distingue du dispositif 10 des figures 1 et 2 par la forme des premiers et seconds pieds 40 à 47 : ces pieds présentent des surfaces transversales d'appui axial mais aussi des surfaces inclinées 48 et 49, respectivement disposées en regard, avec une inclinaison ici d'environ 15° par rapport à l'axe X-X, et distantes l'une de l'autre d'une distance d′ prédéterminée.

De manière avantageuse, l'ensemble des premiers et seconds pieds comporte au moins deux paires de telles surfaces inclinées 48 et 49 orientées en sens opposés de manière à pouvoir conjointement borner le débattement en torsion des languettes dans l'un ou l'autre sens.

Dans la version préférée représentée aux figures 3 et 4, chaque pied comporte deux surfaces 47 ou 48 orientées en sens inverse, disposées circonférentiellement de part et d'autres des surfaces d'appui axial. Bien entendu l'orientation de ces surfaces inclinées est choisie de manière à permettre un libre écartement axial des pieds. L'amplitude de 15° indiquée ci-dessus pour l'inclinaison de ces surfaces apparaît être un bon compromis pour permettre à la fois un bon appui en torsion, sans effet de rampe intempestif, et une libération axiale aisée des pieds.

Plus précisément, les premiers pieds ont un profil convexe engagé avec jeu dans le profil concave des seconds pieds (ou réciproquement) avec les surfaces inclinées du profil concave convergeant à l'intérieur des pieds le comportant.

On appréciera enfin que chaque surface inclinée est elle-même encadrée circonférentiellement par deux surfaces transversales d'appui axial : il y a donc ici pour chaque couple de pieds, une surface transversale 50 ou 51 centrale et deux surfaces transversales latérales 52 ou 53.

C'est au travers de ces surfaces latérales que passe le plan de coupe de la figure 4.

Dans l'exemple représenté, la surface transversale centrale s'étend sur la moitié de la dimension dc tandis que les surfaces transversales latérales s'étendent chacune sur un peu moins d'un quart de cette dimension.

En pratique, des sillons concaves 54 sont aménagés radialement à chaque changement d'inclinaison des surfaces en regard ; ils réduisent les risques de concentrations de contraintes excessives à la jonction de ces surfaces. Ces sillons sont par exemple obtenus par perçage, dans les colonnes de rigidification de l'ébauche et avant de les séparer en premiers et seconds pieds, d'alésages facilitant les changements de direction et les changements de fil lors de la découpe des saignées par électro-érosion par fil.

A titre d'exemple, l'écartement au repos des surfaces transversales centrales 50 et 51 est de 0,3 mm, celui des surfaces transversales latérales 52 et 53 est de 0,4 (donc supérieur : il s'agit de dégagements), et l'écartement entre surfaces inclinées à 15° vaut 0,1 mm ce qui correspond à un débattement axial supérieur à 0,3 mm, c'est-à-dire supérieur à l'écartement des surfaces centrales : l'appui axial est donc bien assuré par les surfaces centrales.

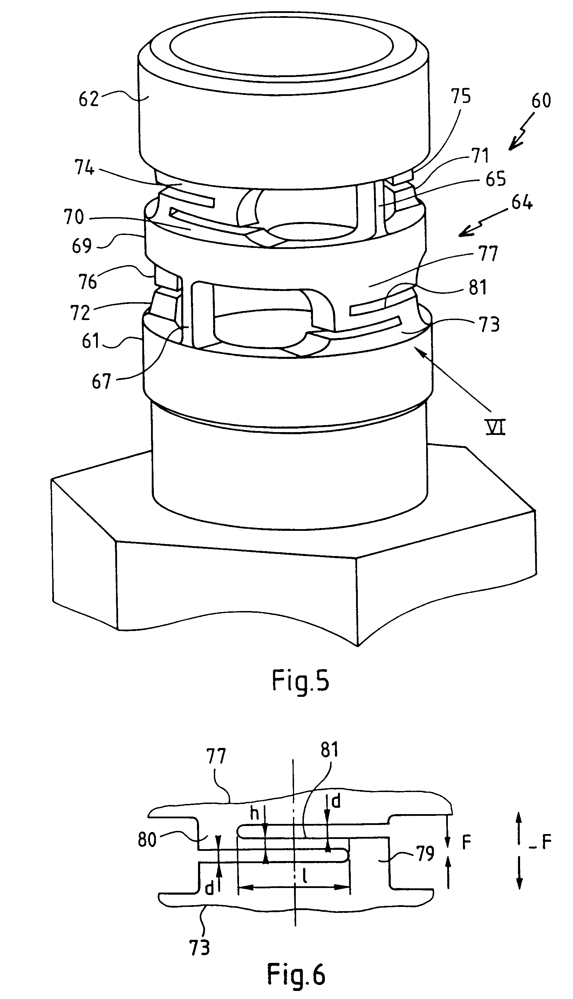

Les figures 5 et 6 représentent un troisième dispositif de fixation temporaire repéré 60 dans son ensemble, et dont les éléments similaires à ceux du dispositif 10 portent les mêmes chiffres de référence, mais augmentés du chiffre 50.

L'originalité de ce troisième dispositif réside dans le fait que les premiers et deuxièmes pieds ne sont pas complètement isolés mais sont au contraire reliés par des languettes transversales allongées circonférentiellement et qui résistent par traction (voire par compression) aux efforts de torsion, ce qui donne une allure générale en Z (ou en Z inversé).

Ainsi qu'il ressort plus précisément de la figure 6, chaque couple de pieds en regard (par exemple 73 et 77) comporte deux saillies axiales 79 et 80 décalées circonférentiellement et venant chacune, vis à vis du pied en regard, à la distance axiale d voulue pour assurer le débattement voulu en flexion, ces saillies étant reliées par une languette 81 destinée à rompre en flexion lors de la rupture calibrée de la zone de liaison 64.

Il faut noter à ce propos que la présence de ces languettes transversales modifie très peu l'énergie à fournir à la rupture ; en supposant les languettes axiales et transversales identiques (en dehors de leur orientation), le supplément d'énergie requis pour la rupture des languettes transversales vaut environ (h/6l) fois l'énergie de rupture en traction des languettes axiales - où h est l'épaisseur (parallèlement à la direction de flexion) et l la longueur - c'est-à-dire est très faible.

De manière préférée, à une paire de languettes axiales est associée une paire de languettes transversales ayant la même orientation (ce qui correspond, vus de l'extérieur du dispositif, à un Z et à un Z inversé) grâce à quoi, quel que soit le sens de torsion, l'une des languettes y résiste en traction, en préservant ainsi l'autre languette vis à vis d'efforts de compression susceptibles d'altérer les caractéristiques de ces languettes en flambage.

Bien entendu, il faut en pratique dimensionner ces languettes transversales de manière à ce qu'elles se déforment élastiquement (et non plastiquement) en cas de débattement en flexion (F ou -F sur la figure 6) jusqu'en butée axiale des pieds, et de manière à ce qu'elles résistent à des niveaux prévisibles d'efforts de traction/compression.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif monobloc(10, 30, 60) de fixation temporaire d'un objet à un support globalement allongé selon un axe de référence et comportant une première partie (11, 31, 61) destinée à être fixée au support, et une seconde partie (12, 32, 62) destinée à être fixée à l'objet et raccordée à la première partie par une portion de liaison souple (14, 34, 64) en flexion comportant une paire de languettes axiales identiques (15-18 ; 35-38 ; 65-68) alignées selon une première ligne (X-X, V-V) transversale à l'axe de référence et coplanaire à celui-ci, flexibles parallèlement à une seconde ligne transversale (Y-Y, X-X) à l'axe de référence et perpendiculaire à la première ligne transversale, et ayant une même énergie de rupture en traction parallèlement à l'axe, cette portion de liaison comportant en outre au moins une paire de premiers pieds (20-23 ; 40-43 ; 70-73) solidaires de la première partie, disposés de part et d'autre de cette première ligne transversale et s'étendant axialement vers la seconde partie, et au moins une paire de second pieds (24-27 ; 44-47 ; 74-77) solidaires de la seconde partie et s'étendant axialement vers cette paire de premiers pieds en en étant séparés axialement par une même distance axiale prédéterminée (d).

2. Dispositif selon la revendication 1, caractérisé en ce que cette portion de liaison (14, 34, 64) comporte une autre paire de languettes axiales identiques, alignées selon une troisième ligne (V-V) transversale parallèle à cette seconde ligne (Y-Y) en en étant décalée axialement, flexibles parallèlement à cette première ligne transversale (X-X), et ayant une même énergie de rupture en traction, cette paire de languettes axiales alignées selon la première ligne transversale et cette autre paire de languettes axiales étant décalées axialement en étant reliées entre elles par une pièce intermédiaire, ce dispositif comportant au moins une autre paire de premiers pieds solidaires de la première partie, disposés de part et d'autre de cette autre paire de languettes axiales et s'étendant axialement vers la seconde partie et au moins une autre paire de seconds pieds solidaires de la seconde partie et s'étendant axialement vers cette autre paire de premiers pieds en en étant séparés par une même autre distance axiale prédéterminée.

3. Dispositif selon la revendication 1 ou la revendication 2, caractérisé en ce que, à chaque paire de languettes axiales sont associées une paire de premiers pieds et une paire de seconds pieds, ces paires de premiers et seconds pieds étant décalées vis à vis des languettes axiales de cette paire de 90° autour de l'axe de référence.

4. Dispositif selon l'une quelconque des revendications 1 à 3, caractérisé en ce que toutes les languettes (15618 ; 35-38 ; 65-68) et tous les premiers et seconds pieds (20-27 ; 40-47 ; 70-77) sont à une même distance (R) de l'axe de référence.

5. Dispositif selon l'une quelconque des revendications 1 à 4, caractérisé en ce que l'un au moins des premiers pieds (40-43) et celui des seconds pieds (44-47) qui lui est axialement en regard comportent respectivement des surfaces (48, 49) en regard, inclinées par rapport à l'axe de référence, et séparées par une distance prédéterminée (d′), ces surfaces formant ainsi butées en torsion dans au moins un sens autour de l'axe de référence.

6. Dispositif selon l'une quelconque des revendications 1 à 4, caractérisé en ce que cette paire de premiers pieds (40-43) et cette paire de seconds pieds (44-47) comportent chacune au moins une paire de deux surfaces inclinées (48, 49) ayant des inclinaisons de sens opposés par rapport à l'axe, ces paires de surfaces inclinées étant respectivement en regard à une même distance prédéterminée en sorte de former des butées de torsion dans les deux sens autour de l'axe de référence.

7. Dispositif selon la revendication 6, caractérisé en ce que ces inclinaisons de sens opposés ont une même valeur absolue.

8. Dispositif selon l'une quelconque des revendications 5 ou 7, caractérisé en ce que chaque premier pied (40-43) et second pied (44-47) comportent une telle paire de surfaces inclinées ayant des inclinaisons de sens opposés.

9. Dispositif selon l'une quelconque des revendications 5 à 7, caractérisé en ce que lesdites surfaces inclinées (48, 49) ont une inclinaison par rapport à l'axe de référence comprise en valeur absolue entre 10° et 20°.

10. Dispositif selon l'une quelconque des revendications 1 à 4, caractérisé en ce que l'un au moins des premiers pieds (70-73) et celui des seconds pieds (74-77) qui lui est axialement en regard comportent des saillies axiales (79, 80) décalées au moins approximativement parallèlement à la paire associée de languettes axiales et reliées par une languette secondaire transversale (81) allongée au moins approximativement parallèlement à cette paire associée de languettes axiales.

11. Dispositif selon la revendication 10, caractérisé en ce que la paire de premiers pieds (70-73) et la paire de seconds pieds (74-77) comportent chacune deux saillies axiales, les saillies axiales des premiers pieds étant reliées aux saillies axiales des seconds pieds respectivement par deux languettes secondaires disposées de part et d'autre de la paire associée de languettes axiales et allongées, dans le même sens, au moins approximativement parallèlement à cette paire associée de languettes axiales, grâce à quoi, lorsque ce dispositif est sollicité en torsion autour de l'axe de référence, l'une des languettes secondaires est sollicitée en traction tandis que l'autre de ces languettes est sollicitée en compression.

12. Dispositif selon l'une quelconque des revendications 1 à 11, caractérisé en ce que ces première et seconde parties (11, 12 ; 31, 32 ; 61, 62) sont globalement cylindriques et creuses.

13. Procédé de fabrication d'un dispositif monobloc de fixation temporaire d'un objet à un support, globalement allongé selon un axe de référence et comportant une première partie (11, 31, 61) destinée à être fixée au support, une seconde partie (12, 32, 62) destinée à être fixée à l'objet et raccordé à cette première partie par une portion de liaison (14, 34, 64) souple en flexion comportant une paire de languettes axiales identiques (15-18 ; 35-38 ; 65-68) alignées selon une première ligne transversale à l'axe de référence et coplanaire à celui-ci, flexibles parallèlement à une seconde ligne transversale à l'axe de référence et perpendiculaire à la première ligne transversale, et ayant une même énergie de rupture en traction parallèlement à l'axe, selon lequel, dans un premier temps, on élabore une ébauche (100) comportant une première portion d'ébauche (101) ayant la géométrie voulue pour cette première partie (11), une seconde portion d'ébauche (102) ayant la géométrie voulue pour cette seconde partie (12) et une portion intermédiaire d'ébauche (103) reliant ces première et seconde portions d'ébauche et comportant une première paire de colonnes axiales principales (104, 105) alignées selon cette première ligne et au moins une seconde paire de colonnes axiales de rigidification (106, 107) disposées respectivement de part et d'autre de cette première ligne, dans un deuxième temps on usine dans cette première paire de colonnes axiales ladite paire de languettes axiales (15-18), et dans un troisième temps on usine dans cette seconde paire de colonnes axiales des saignées au moins en partie transversales à l'axe de référence en sorte d'y dégager une paire de premiers pieds solidaires de la première partie disposés de part et d'autre de cette première ligne transversale et s'étendant axialement vers la seconde partie, et au moins une paire de seconds pieds solidaires de la seconde partie et s'étendant axialement vers cette paire de premiers pieds en en étant séparés axialement par une même distance axiale prédéterminée.

14. Procédé selon la revendication 13, caractérisé en ce que, dans le premier temps, on ménage dans cette portion intermédiaire une autre paire de colonnes axiales principales décalée axialement et angulairement vis à vis de cette paire de colonnes axiales principales et une autre seconde paire de colonnes axiales de rigidification séparées de cette paire de colonnes axiales principales et de cette seconde paire de colonnes axiales par une zone intermédiaire, dans le deuxième temps on usine dans cette autre paire de colonnes principales des languettes axiales identiques de même énergie à la rupture en traction et dans le troisième temps on usine dans cette autre seconde paire de colonnes axiales de rigidification des saignées en sorte d'y dégager une autre paire de premiers pieds solidaires de la première partie, disposés de part et d'autre de cette autre paire de languettes axiales et s'étendant axialement vers la seconde partie et au moins une autre paire de seconds pieds solidaires de la seconde partie et s'étendant axialement vers cette autre paire de premiers pieds en en étant séparés par une même autre distance axiale prédéterminée.

15. Procédé selon la revendication 13 ou la revendication 14, caractérisé en ce qu'il y a une seule seconde paire de colonnes axiales de rigidification par paire de colonnes axiales principales.

16. Procédé selon la revendication 13 ou la revendication 14, caractérisé en ce que toutes les languettes et tous les premiers et seconds pieds sont à une même distance (R) de l'axe de référence.

17. Procédé selon l'une quelconque des revendications 13 à 16, caractérisé en ce qu'on usine une seule saignée par colonne de cette seconde paire, ces saignées étant rectilignes transversales et s'étendent sur toute la section desdites colonnes de la seconde paire.

18. Procédé selon l'une quelconque des revendications 13 à 16, caractérisé en ce que chaque saignée traverse complètement ces colonnes de la seconde paire et comporte une partie transversale et au moins une partie (48, 49) inclinée par rapport à l'axe en sorte de former des surfaces de butée en torsion.

19. Procédé selon la revendication 18, caractérisé en ce que chaque saignée comporte une partie transversale entre deux parties (48, 49) inclinées par rapport à l'axe de référence, ayant des inclinaisons de sens opposés, en sorte de dégager des surfaces de butée en torsion pour chacun des sens de torsion autour de l'axe de référence.

20. Procédé selon la revendication 18 ou la revendication 19, caractérisé en ce que chaque partie inclinée a une inclinaison comprise entre 10 et 20° par rapport à l'axe de référence.

21. Procédé selon l'une quelconque des revendications 13 à 16, caractérisé en ce que dans chaque colonne de cette seconde paire on usine deux saignées transversales ne traversant, parallèlement à la ligne reliant les languettes axiales associées, qu'une partie de cette colonne, et orientées en sens opposés en sorte de dégager dans cette colonne une languette transversale (81) de liaison entre le premier et le second pied.

22. Procédé selon l'une quelconque des revendications 13 à 21, caractérisé en ce que chaque saignée est obtenue par électro-érosion, de préférence par fil.

23. Procédé selon l'une quelconque des revendications 13 à 22, caractérisé en ce que l'ébauche est globalement cylindrique et axialement creuse.

## Claims

1. Unitary construction device (10, 30, 60) for temporarily attaching an object to a support of generally elongate shape along a reference axis, comprising a first part (11, 31, 61) adapted to be attached to the support and a second part (12, 32, 62) adapted to be attached to the object and joined to the first part by a coupling portion (14, 34, 64) flexible in bending comprising a pair of identical axial tangs (15-18; 35-38; 65-68) aligned on a first line (X-X, V-V) transverse to the reference axis and coplanar therewith, flexible parallel to a second line (Y-Y, X-X) transverse to the reference axis and perpendicular to the first transverse line, and requiring the same energy to fracture in tension parallel to the axis, said coupling portion further comprising at least one pair of first feet (20-23; 40-43; 70-73) attached to the first part, one on each side of said first transverse line and extending axially towards the second part, and at least one pair of second feet (24-27; 44-47; 74-77) attached to the second part and extending axially towards said pair of first feet and separated therefrom by the same predetermined axial distance (d).

2. Device according to claim 1 characterized in that said coupling portion (14, 34, 64) comprises another pair of identical axial tangs aligned on a third transverse line (V-V) parallel to said second line (Y-Y) from which it is offset axially, flexible parallel to said first transverse line (X-X) and requiring the same energy to fracture in tension, said pair of axial tangs aligned on the first transverse line and said other pair of axial tangs being offset in the axial direction and joined together by an intermediate part, the device comprising at least one other pair of first feet attached to the first part, one on each side of said other pair of axial tangs and extending axially towards the second part and at least one other pair of second feet attached to the second part and extending axially towards said other pair of first feet and separated therefrom by the same other predetermined axial distance.

3. Device according to claim 1 or claim 2 characterized in that each pair of axial tangs is associated with a pair of first feet and a pair of second feet and said pairs of first and second feet are offset from the axial tangs of said pair by 90° about the reference axis.

4. Device according to any one of claims 1 to 3 characterized in that all the tangs (15618; 35-38; 65-68) and all the first and second feet (20-27; 40-47; 70-77) are at the same distance (R) from the reference axis.

5. Device according to any one of claims 1 to 4 characterized in that at least one of the first feet (40-43) and that of the second feet (44-47) axially facing it comprise respective facing surfaces (48, 49) inclined to the reference axis and separated by a predetermined distance (d') whereby said surfaces form abutments in torsion in at least one direction about the reference axis.

6. Device according to any one of claim 1 to 4 characterized in that said pair of first feet (40-43) and said pair of second feet (44-47) each comprise at least one pair of inclined surfaces (48, 49) having opposite directions of inclination relative to the axis, said pairs of inclined surfaces facing each other at the same predetermined distance so as to form abutments in torsion in both directions about the reference axis.

7. Device according to claim 6 characterized in that said inclinations in opposite directions have the same absolute value.

8. Device according to claim 5 or claim 7 characterized in that each first foot (40-43) and second foot (44-47) comprise a pair of inclined surfaces inclined in opposite directions.

9. Device according to any one of claims 5 to 7 characterized in that said inclined surfaces (48, 49) have an absolute value of inclination relative to the reference axis between 10° and 20°.

10. Device according to any one of claims 1 to 4 characterized in that at least one of said first feet (70-73) and that of said second feet (74-77) axially facing it comprise axial projections (79, 80) offset at least approximately parallel to the associated pair of axial tangs and joined by an elongate transverse secondary tang (81) at least approximately parallel to said associated pair of axial tangs.

11. Device according to claim 10 characterized in that the pair of first feet (70-73) and the pair of second feet (74-77) each comprise two axial projections, the axial projections of the first feet being joined to the axial projections of respective second feet by two elongate secondary tangs, on one each side of the associated pair of axial tangs and in the same direction at least approximately parallel to said associated pair of axial tangs whereby when the device is loaded in torsion about the reference axis one of the secondary tangs is loaded in tension and the other of these tangs is loaded in compression.

12. Device according to any one of claims 1 to 11 characterized in that said first and second parts (11, 12; 31, 32; 61, 62) are substantially cylindrical and hollow.

13. Method of manufacturing a unitary construction device for temporarily attaching an object to a support, generally elongate along a reference axis and comprising a first part (11, 31, 61) adapted to be attached to the support, a second part (12, 32, 62) adapted to be attached to the object and joined to the first part by a coupling portion (14, 34, 64) flexible in bending comprising a pair of identical axial tangs (15-18; 35-38; 65-68) aligned on a first line transverse to the reference axis and coplanar therewith, flexible parallel to a second line transverse to the reference axis and perpendicular to the first transverse line and requiring the same energy to fracture in tension parallel to the axis, in which method: in a first stage, a blank (100) is produced comprising a first portion (101) having the geometry required of said first part (11), a second portion (102) having the geometry required of said second part (12) and an intermediate portion (103) joining said first and second portions and comprising a first pair of main axial columns (104, 105) aligned on said first line and at least a second pair of stiffener axial columns (106, 107) one on each side of said first line; in a second stage, said pair of axial tangs (15-18) is machined into said first pair of axial columns; in a third stage, cuts are machined into said second pair of axial columns at least in part transverse to the reference axis so as to form therein a pair of first feet attached to the first part one on each side of said first transverse line and extending axially towards the second part and at least one pair of second feet attached to the second part and extending axially towards said pair of first feet from which it is separated by the same predetermined axial distance.

14. Method according to claim 13 characterized in that, in the first stage, another pair of main axial columns is formed in said intermediate portion offset axially and angularly relative to said pair of main axial columns and a second pair of stiffener axial columns separated from said pair of main axial columns and from said second pair of axial columns by an intermediate area, in the second stage identical axial tangs are machined into said other pair of main columns requiring the same energy to fracture in tension and, in the third stage, cuts are machined into said other second pair of stiffener axial columns so as to form therein another pair of first feet attached to the first part one on each side of said other pair of axial tangs and extending axially towards the second part and at least one other pair of second feet attached to the second part and extending axially towards said other pair of first feet from which it is separated by a same other predetermined axial distance.

15. Method according to claim 13 or claim 14 characterized in that there is a single second pair of axial stiffener columns for each pair of main axial columns.

16. Method according to claim 13 or claim 14 characterized in that all the tangs and all the first and second feet are the same distance (R) from the reference axis.

17. Method according to any one of claims 13 to 16 characterized in that a single cut is machined in each column of said second pair, said cuts being straight, transverse and extending through all the cross-section of said columns of the second pair.

18. Method according to any one of claims 13 to 16 characterized in that each cut passes completely through said columns of the second pair and comprises a transverse part and at least one part (48, 49) inclined relative to the axis so as to form torsion abutment surfaces.

19. Method according to claim 18 characterized in that each cut comprises a transverse part between two parts (48, 49) inclined to the reference axis in opposite directions so as to form torsion abutment surfaces for each direction of torsion about the reference axis.

20. Method according to claim 18 or claim 19 characterized in that each inclined part is inclined to the reference axis at an angle between 10° and 20°.

21. Method according to any one of claims 13 to 16 characterized in that two transverse cuts parallel to the line joining the associated axial tangs are machined through part only of each column of said second pair and oriented in opposite directions so as to form in said column a transverse tang (81) coupling the first and second feet.

22. Method according to any one of claims 13 to 21 characterized in that each cut is formed by spark erosion, preferably using a wire.

23. Method according to any one of claims 13 to 22 characterized in that the blank is substantially cylindrical and axially hollow.

## Patentansprüche

1. Einstückige Vorrichtung (10, 30, 60) zur temporären Befestigung eines Objekts an einem in einer Bezugsachse global langgestreckten Träger mit einem ersten Teil (11, 31, 61), der dazu bestimmt ist, an dem Träger befestigt zu werden, und einem zweiten Teil (12, 32, 62), der dazu bestimmt ist, an dem Objekt befestigt zu werden, und an den ersten Teil durch einen biegsamen Verbindungsabschnitt (14, 34, 64) angeschlossen ist, der ein Paar von gleich ausgebildeten axialen Zungen (15-18; 35-38; 65-68) umfaßt, die gemäß einer ersten sich quer zur Bezugsachse erstreckenden und zu dieser koplanaren Querlinie (X-X, V-V) ausgerichtet sind und parallel zu einer zweiten sich quer zur Bezugsachse erstreckenden und zur ersten Querlinie senkrechten Querlinie (Y-Y, X-X) flexibel sind und dieselbe Bruchenergie bei Zug parallel zur Achse haben, wobei dieser Verbindungsabschnitt außerdem mindestens ein Paar von mit dem ersten Teil fest verbundenen ersten Füßen (20-23; 40-43; 70-73), die zu beiden Seiten dieser ersten Querlinie angeordnet sind und sich axial auf den zweiten Teil zu erstrecken, und mindestens ein Paar von mit dem zweiten Teil fest verbundenen zweiten Füßen (24-27; 44-47; 74-77) umfaßt, die sich axial auf dieses Paar von ersten Füßen zu erstrecken, indem sie axial durch einen gleichen vorbestimmten axialen Abstand getrennt sind.

2. Vorrichtung nach Anspruch 1, dadurch gekennzeichnet, daß dieser Verbindungsabschnitt (14, 34, 64) ein anderes Paar von gleich ausgebildeten axialen Zungen besitzt, die gemäß einer dritten zu dieser zweiten Linie (Y-Y) parallelen, axial versetzten Ouerlinie (V-V) ausgerichtet sind, parallel zu dieser ersten Querlinie (X-X) flexibel sind und dieselbe Bruchenergie bei Zug haben, wobei dieses Paar von gemäß der ersten Querlinie ausgerichteten axialen Zungen und dieses andere Paar von axialen Zungen axial versetzt sind, indem sie miteinander durch ein Zwischenteil verbunden sind, wobei diese Vorrichtung mindestens ein anderes Paar von mit dem ersten Teil fest verbundenen ersten Füßen, die zu beiden Seiten dieses anderen Paars von axialen Zungen angeordnet sind und sich axial auf den zweiten Teil zu erstrecken, und mindestens ein anderes Paar von mit dem zweiten Teil fest verbundenen zweiten Füßen besitzt, die sich axial auf dieses andere Paar von ersten Füßen zu erstrecken, indem sie durch einen anderen gleichen vorbestimmten axialen Abstand getrennt sind.

3. Vorrichtung nach Anspruch 1 oder 2, dadurch gekennzeichnet, daß jedem Paar von axialen Zungen ein Paar von ersten Füßen und ein Paar von zweiten Füßen zugeordnet sind, wobei diese Paare von ersten und zweiten Füßen gegen die axialen Zungen dieses Paares um 90° um die Bezugsachse versetzt sind.

4. Vorrichtung nach einem der Ansprüche 1 bis 3, dadurch gekennzeichnet, daß alle Zungen (15-18; 35-38; 65-68) und alle ersten und zweiten Füße (20-27; 40-47; 70-77) sich im gleichen Abstand (R) von der Bezugsachse befinden.

5. Vorrichtung nach einem der Ansprüche 1 bis 4, dadurch gekennzeichnet, daß mindestens einer der ersten Füße (40-43) und derjenige der zweiten Füße (44-47), der ihm axial gegenübersteht, jeweils einander gegenüberstehende Flächen (48, 49) besitzen, die gegen die Bezugsachse geneigt sind und durch einen vorbestimmten Abstand (d') getrennt sind, wobei diese Fläche so Torsionsanschläge in mindestens einer Richtung um die Bezugsachse bilden.

6. Vorrichtung nach einem der Ansprüche 1 bis 4, dadurch gekennzeichnet, daß dieses Paar von ersten Füßen (40-43) und dieses Paar von zweiten Füßen (44-47) jeweils mindestens ein Paar von zwei geneigten Flächen (48, 49) besitzten, die bezüglich der Achse Neigungen entgegengesetzter Richtungen besitzen, wobei diese Paare von geneigten Flächen sich in einem gleichen vorbestimmten Abstand gegenüberstehen, so daß sie Torsionsanschläge in den beiden Richtungen um die Bezugsachse bilden.

7. Vorrichtung nach Anspruch 6, dadurch gekennzeichnet, daß diese Neigungen entgegengesetzter Richtungen den gleichen absoluten Wert haben.

8. Vorrichtung nach einem der Ansprüche 5 oder 7, dadurch gekennzeichnet, daß jeder erste Fuß (40-43) und jeder zweite Fuß (44-47) ein solches Paar von geneigten Flächen besitzen, die Neigungen entgegengesetzter Richtungen haben.

9. Vorrichtung nach einem der Ansprüche 5 bis 7, dadurch gekennzeichnet, daß diese geneigten Flächen (48, 49) eine Neigung bezüglich der Bezugsachse haben, die in absolutem Wert zwischen 10° und 20° beträgt.

10. Vorrichtung nach einem der Ansprüche 1 bis 4, dadurch gekennzeichnet, daß mindestens einer der ersten Füße (70-73) und derjenige der zweiten Füße (74-77), der ihm axial gegenübersteht, axiale Vorsprünge (79, 80) besitzen, die mindestens annähernd parallel zum zugeordneten Paar von axialen Zungen versetzt sind und durch eine sekundäre Querzunge (81) verbunden sind, die mindestens annähernd parallel zu diesem zugeordneten Paar von axialen Zungen langgestreckt ist.

11. Vorrichtung nach Anspruch 10, dadurch gekennzeichnet, daß das Paar von ersten Füßen (70-73) und das Paar von zweiten Füßen (74-77) jeweils zwei axiale Vorsprünge besitzen, wobei die axialen Vorsprünge der ersten Füße mit den axialen Vorsprüngen der zweiten Füße jeweils durch zwei sekundäre Zungen verbunden sind, die zu beiden Seiten des zugeordneten Paars von axialen Zungen angeordnet sind und in derselben Richtung mindestens annähernd parallel zu diesem zugeordneten Paar von axialen Zungen langgestreckt sind, so daß, wenn diese Vorrichtung auf Torsion um die Bezugsachse belastet ist, eine der sekundären Zungen auf Zug belastet ist, während die andere dieser Zungen auf Kompression belastet ist.

12. Vorrichtung nach einem der Ansprüche 1 bis 11, dadurch gekennzeichnet, daß dieser erste und dieser zweite Teil (11, 12; 31, 32; 61, 62) global zylindrisch und hohl sind.

13. Verfahren zur Herstellung einer einstückigen Vorrichtung zur temporären Befestigung eines Objekts an einem gemäß einer Bezugsachse global langestreckten Träger mit einem ersten Teil (11, 31, 61), der dazu bestimmt ist, an dem Träger befestigt zu werden, und einem zweiten Teil (12, 32, 62), der dazu bestimmt ist, an dem Objekt befestigt zu werden, und an den ersten Teil durch einen biegsamen Verbindungsabschnitt (14, 34, 64) angeschlossen ist, der ein Paar von gleich ausgebildeten axialen Zungen (15-18; 35-38; 65-68) umfaßt, die gemäß einer ersten sich quer zur Bezugsachse erstreckenden und zu dieser koplanaren Querlinie (X-X, V-V) ausgerichtet sind, parallel zu einer zweiten sich quer zur Bezugsachse erstreckenden und zur ersten Querlinie senkrechten Querlinie (Y-Y, X-X) flexibel sind und dieselbe Bruchenergie bei Zug parallel zur Achse haben, gemäß welchem man in einer ersten Zeit einen Rohling (100) herstellt, der einen ersten Rohlingsabschnitt (101) mit der für diesen ersten Teil (11) gewünschten Geometrie, einen zweiten Rohlingsabschnitt (102) mit der für diesen zweiten Teil (12) gewünschten Geometrie und einen Rohlingszwischenabschnitt (103) besitzt, der diesen ersten und diesen zweiten Rohlingsabschnitt verbindet und ein erstes Paar von axialen Hauptsäulen (104, 105), die gemäß dieser ersten Linie ausgerichtet sind, und mindestens ein zweites Paar von axialen Versteifungssäulen (106, 107) besitzt, die jeweils zu beiden Seiten dieser ersten Linie angeordnet sind, man in einer zweiten Zeit in diesem ersten Paar von axialen Säulen dieses Paar von axialen Zungen (15-18) ausarbeitet und in einer dritten Zeit man in diesem zweiten Paar von axialen Säulen Einschnitte ausarbeitet, die sich mindestens teilweise quer zur Bezugsachse erstrecken, so daß darin ein Paar von mit dem ersten Teil fest verbundenen ersten Füßen, die zu beiden Seiten dieser ersten Querlinie angeordnet sind und sich axial auf diesen zweiten Teil zu erstrecken, und mindestens ein Paar von mit dem zweiten Teil fest verbundenen zweiten Füßen freigelegt werden, die sich axial auf dieses Paar von ersten Füßen zu erstrecken, indem sie axial durch einen gleichen vorbestimmten axialen Abstand getrennt sind.

14. Verfahren nach Anspruch 13, dadurch gekennzeichnet, daß man in einer ersten Zeit in diesem Zwischenabschnitt ein anderes Paar von axialen Hauptsäulen, das axial und winkelmäßig gegen dieses Paar von axialen Hauptsäulen versetzt ist, und ein anderes zweites Paar von axialen Versteifungssäulen bildet, die von diesem Paar von axialen Hauptsäulen und diesem zweiten Paar von axialen Säulen durch eine Zwischenzone getrennt sind, man in der zweiten Zeit in diesem anderen Paar von Hauptsäulen gleich ausgebildete axiale Zungen mit derselben Bruchenergie bezüglich Zug ausarbeitet und man in der dritten Zeit in diesem anderen zweiten Paar von axialen Versteifungssäulen Einschnitte ausarbeitet, so daß darin ein anderes Paar von mit dem ersten Teil fest verbundenen ersten Füßen, die zu beiden Seiten dieses anderen Paars von axialen Zungen angeordnet sind und sich axial auf den zweiten Teil zu erstrecken, und mindestens ein anderes Paar von mit dem zweiten Teil fest verbundenen zweiten Füßen freigelegt werden, die sich axial auf dieses andere Paar von ersten Füßen zu erstrecken, indem sie durch den gleichen anderen vorbestimmten axialen Abstand getrennt sind.

15. Verfahren nach Anspruch 13 oder 14, dadurch gekennzeichnet, daß ein einziges zweites Paar von axialen Versteifungssäulen pro Paar von axialen Hauptsäulen vorgesehen ist.

16. Verfahren nach Anspruch 13 oder Anspruch 14, dadurch gekennzeichnet, daß alle Zungen und alle ersten und zweiten Füße sich im gleichen Abstand (R) von der Bezugsachse befinden.

17. Verfahren nach einem der Ansprüche 13 bis 16, dadurch gekennzeichnet, daß man einen einzigen Einschnitt pro Säule dieses zweiten Paares ausarbeitet, wobei diese Einschnitte geradlinig sind, quer verlaufen und sich über den ganzen Querschnitt dieser Säulen des zweiten Paares erstrecken.

18. Verfahren nach einem der Ansprüche 13 bis 16, dadurch gekennzeichnet, daß jeder Einschnitt diese Säulen des zweiten Paars vollständig durchquert und einen Querteil und mindestens einen Teil (48, 49) besitzt, der bezüglich der Achse geneigt ist, so daß Torsionsanschlagsflächen gebildet werden.

19. Verfahren nach Anspruch 18, dadurch gekennzeichnet, daß jeder Einschnitt einen Querteil zwischen zwei bezüglich der Bezugsachse geneigten Teilen (48, 49) mit Neigungen entgegengesetzter Richtungen besitzt, so daß Torsionsanschlagsflächen für jede der Torsionsrichtungen um die Bezugsachse freigelegt werden.

20. Verfahren nach Anspruch 18 oder Anspruch 19, dadurch gekennzeichnet, daß jeder geneigte Teil eine Neigung von 10 bis 20° bezüglich der Bezugsachse hat.

21. Verfahren nach einem der Ansprüche 13 bis 16, dadurch gekennzeichnet, daß in jeder Säule dieses zweiten Paares zwei Quereinschnitte ausgearbeitet werden, die parallel zu der die zugeordneten axialen Zungen verbindenden Linie nur einen Teil dieser Säule durchqueren und in entgegengesetzten Richtungen gerichtet sind, so daß in dieser Säule eine Verbindungsquerzunge (81) zwischen dem ersten und dem zweiten Fuß freigelegt wird.

22. Verfahren nach einem der Ansprüche 13 bis 21, dadurch gekennzeichnet, daß jeder Einschnitt durch Elektroerosion vorzugsweise durch Draht erhalten wird.

23. Verfahren nach einem der Ansprüche 13 bis 22, dadurch gekennzeichnet, daß der Rohling global zylindrisch und axial hohl ist.
